# EUROPEAN PATENT SPECIFICATION

(11) **EP 0 572 147 B1**
(45) Date of publication and mention of the grant of the patent: **10.04.1996**
(21) Application number: 93303770.7
(22) Date of filing: 17.05.1993
(51) Int. Cl.: B60S 1/52, B05B 15/10

(54) **Washing system for motor vehicle screens**
Waschsystem für Kraftfahrzeugscheiben
Système de lavage pour glace de véhicule automobile

(30) Priority: 18.05.1992 GB 9210552
(43) Date of publication of application: 01.12.1993
(73) Proprietor: VALEO WIPER SYSTEMS LTD., Mid Glamorgan, Wales CF8 7XD (GB)
(72) Inventor: Russ, Nicholas S., Llandaff, Cardiff CFS 2PQ, Wales (GB)
(74) Representative: Driver, Virginia Rozanne

(56) References cited:
- EP-A- 0 262 402
- EP-A- 0 511 104
- FR-A- 2 671 529

## Description

This invention relates to a washing system for motor vehicle screens, particularly but not exclusively for cleaning headlamp screens.

Washing systems for delivering cleaning fluid to clean headlamp screens and the like are known. They generally comprise a supply reservoir for containing the cleaning fluid, the supply reservoir being connected to a fluid delivery device which in its operative position can direct fluid onto the headlamp screen. Commonly the fluid delivery device comprises a fixed nozzle but for optimum performance it is desirable that the nozzle should be close to the headlamp screen and it is increasingly found that the styling requirements of the vehicle prevent this. In order to overcome this problem, washing systems have been proposed in which the fluid delivery device is movable between a retracted stand-by position, and an extended, operative position close to the headlamp screen. The fluid delivery device can be located in the bumper region of a vehicle, either horizontally above the bumper or vertically within the bumper itself. A known fluid delivery device is described in EP-A-0262402. In that arrangement the fluid delivery device is arranged horizontally above the bumper and beneath the headlamp. This device comprises a cylinder fixed relative to the car body in which a piston can be moved against a spring force from an inoperative position to an operative position. The piston has an elongate nozzle carrier which projects from the cylinder when the piston is in the inoperative position and on the end of which remote from the piston is located a spray nozzle. A fluid delivery line from the supply reservoir extends into a pressure space behind the piston so that when fluid is allowed to come into the pressure space it forces the piston out of the cylinder against the action of the spring so as to extend the spray nozzle into a position in which it can spray cleaning fluid onto the headlamp screen. This prior art document EP-A-0262402 is used to form the preamble of the appended claims.

In addition to the above-referenced device, other washing arrangements are known wherein the fluid delivery device is arranged vertically in the bumper but the same principle applies, that is a cylinder is fixed relative to the bumper and there is guided in the cylinder a piston which can be forced by the action of cleaning fluid from the supply reservoir out of the cylinder to extend a spray nozzle into a position suitable for directing cleaning fluid onto the headlamp screen.

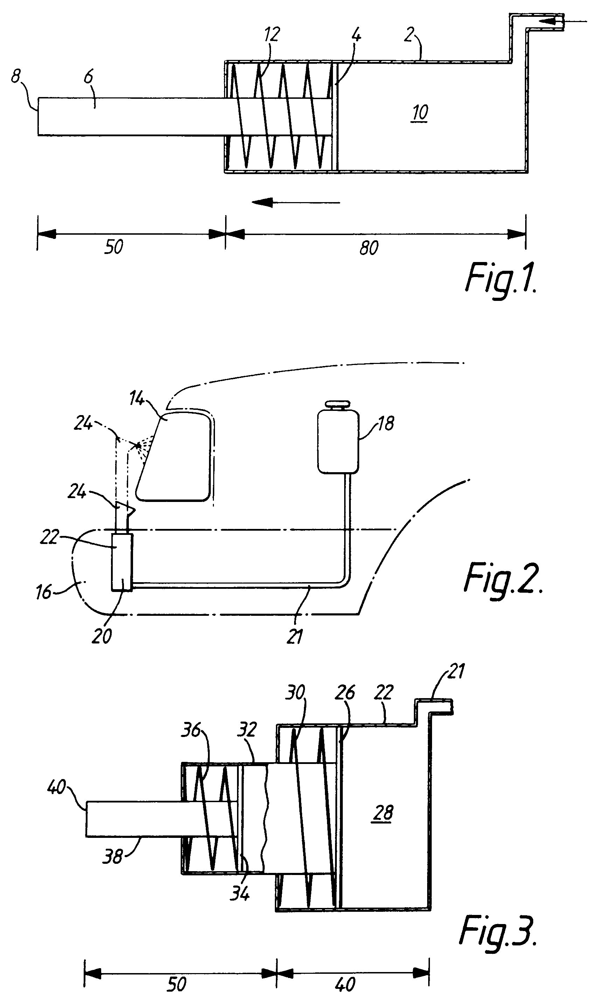

The principle of operation of the known fluid delivery devices is shown in Figure 1 of the drawings accompanying the present description. Thus, the fluid delivery device comprises a cylinder 2 which is fixed relative to the car body or to the car bumper as appropriate and a piston 4 guided for movement within the cylinder 2. The piston carries an elongate nozzle carrier 6 which has at its end 8 remote from the piston a spray nozzle (not shown in Figure 1). The cylinder defines behind the piston 4 a pressure space 10 into which cleaning fluid from a supply reservoir (not shown in Figure 1) can enter. A spring 12 is arranged between the piston 4 and an end wall of the cylinder 2 and when cleaning fluid enters the pressure space 10 behind the piston 4 the piston 4 is caused to move to the left in Figure 1 against the action of the spring 12. When the supply of fluid ceases, the piston returns to its rest position under the action of the spring 12.

Fluid delivery arrangements of this type are generally known as telescopic washers for the clear reason that the piston is housed telescopically within the cylinder 2 in its inoperative state. With these arrangements, there is a limit to the amount of extension which can be achieved by movement of the piston for a given length of cylinder. This arises from the fact that the elongate nozzle carrier carried by the piston must not be significantly longer than the cylinder itself so that it does not represent an obstruction to light from the headlamp when in the inoperative position and also because the piston cannot move the full length of the cylinder because the spring will take up some space even when compressed. As the design of car headlamps alters, their screens are becoming progressively more angled so that the optimum point for a spray nozzle to deliver cleaning fluid is now at a greater distance from the fixed cylinder of the washer than it has been previously. Furthermore, where the cylinder is to be located within the car bodywork or bumper there are physical limitations on the size of the cylinder which can be accommodated before it interferes materially with the design of the car. The present invention seeks therefore to provide a fluid delivery system in which a greater degree of extension can be achieved for a given length of cylinder.

According to the present invention there is provided a fluid delivery system for delivering cleaning fluid in a washer system for a vehicle, the fluid delivery system comprising a first piston/cylinder combination connected or connectable to a supply reservoir containing a cleaning fluid, one of the piston and cylinder of the first combination being movable relative to the other under the action of cleaning fluid and against the action of first biasing means; and a movable nozzle support portion adapted to support a nozzle at its distal end for the delivery of cleaning fluid; characterised by a second piston/cylinder combination movable with the movable one of the piston and cylinder of the first combination and having one of its piston and cylinder movable relative to the other under the action of cleaning fluid and against the action of second biasing means; and the nozzle support portion being movable with the movable one of the piston and cylinder of the second combination.

Preferably the cylinder of the first combination is fixed relative to a vehicle body while the piston of the first combination is movable, and the cylinder of the second combination is movable with the piston of the first combination while the piston of the second combination moves relative to its cylinder and carries the nozzle. The arrangement is then such that fluid entering the first cylinder causes the first piston to move and, on entering the second cylinder, which is moving with the first piston, causes the second piston to move to thereby place the distal end of the nozzle support portion at a fluid delivery location.

With this arrangement, there is a dual telescopic action of the first piston within the first or outer cylinder and the second piston within the second or inner cylinder. The inner cylinder can itself move with the second piston with respect to the outer cylinder. This thus enables the fluid delivery location to be spaced further from the top of the outer cylinder for a given length of outer cylinder.

As an example, for the telescopic system illustrated in Figure 1, for every 10mm of movement of the piston, the cylinder has to be at least 16mm long. Thus, for a fluid delivery location which is to be spaced 50mm from the top of the cylinder the cylinder must be at least 80mm long with additional length for fixings etc. With the present invention however for every 10mm of movement of the second piston, the outer cylinder need only be 8mm long. Thus, for a fluid delivery location spaced 50mm from the upper surface of the outer cylinder, the outer cylinder needs only to be 40mm long, with additional length for fixings etc. There is thus a significant saving in space for a given required extension.

In the drawings:
Figure 1 illustrates a known telescopic arrangement;
Figure 2 is a sketch showing where the fluid delivery system might be located in a vehicle.
Figure 3 illustrates a dual telescopic arrangement diagrammatically to illustrate the principle of the invention;
Figure 4 is a section through a preferred embodiment of the present invention when inoperative; and
Figure 5 is a section through a preferred embodiment of the present invention when in its operative position.

For a better understanding of the present invention, and to show how the same may be carried into effect, reference will now be made by way of example to Figures 2 to 5 of the accompanying drawings.

Turning firstly to Figure 2, this illustrates diagrammatically the front of a car with a headlamp 14 and bumper 16. A supply reservoir 18 housed within the car body contains a cleaning fluid which can be delivered to a fluid delivery device 20 by way of a fluid delivery conduit 21. The fluid delivery device comprises an outer cylinder 22 which as will be described in more detail hereinafter houses a piston which carries a nozzle supply portion to which is secured a nozzle 24 for delivering cleaning fluid to the headlamp screen. The thick black lines show the fluid delivery system in its inoperative position while the dotted lines show the fluid delivery nozzle in its fluid delivery location.

Reference will now be made to Figure 3 to describe the principle underlying the present invention. There is an outer cylinder 22 which houses a first piston 26. The cylinder 22 defines a pressure space 28 behind the first piston 26 into which cleaning fluid from the supply reservoir can be introduced along the conduit 21. Introduction of this fluid causes the piston 26 to move to the left in Figure 3 against the action of a first spring 30. The first piston carries an inner cylinder 32 which in the preferred embodiment is formed integrally with the piston 26. In any event, the inner cylinder 32 moves with the piston 26. Within the inner cylinder 32 there is located a second piston 34 which can move relative to the inner cylinder 32 and which moves to the left in Figure 2, under the action of fluid coming into the outer cylinder 22 and from there into the inner cylinder 32, against the action of a second spring 36. The second piston 34 carries an elongate nozzle support portion 38 which carries at its end 40 remote from the piston 34 the fluid supply nozzle 24 (shown in Figure 2 but not in Figure 3).

The arrangement is such that when telescoped the piston 34 sits against the piston 26 and both sit close to the right hand wall of the cylinder 22 in Figure 3. When fluid from the supply reservoir enters the pressure space 28 of the outer cylinder 22, this fluid forces the piston 26 to move to the left. The piston 26 carries with it the piston 34 and also allows fluid to enter the inner cylinder 32 so that the piston 34 is driven under the action of this fluid to the left in Figure 3. Figure 3 shows the arrangement in its fully extended position.

The arrangement of the present invention is not limited to two pistons, and additional pistons and cylinders may be provided within those shown in Figure 3 if a greater extension is required for a given length of outer cylinder.

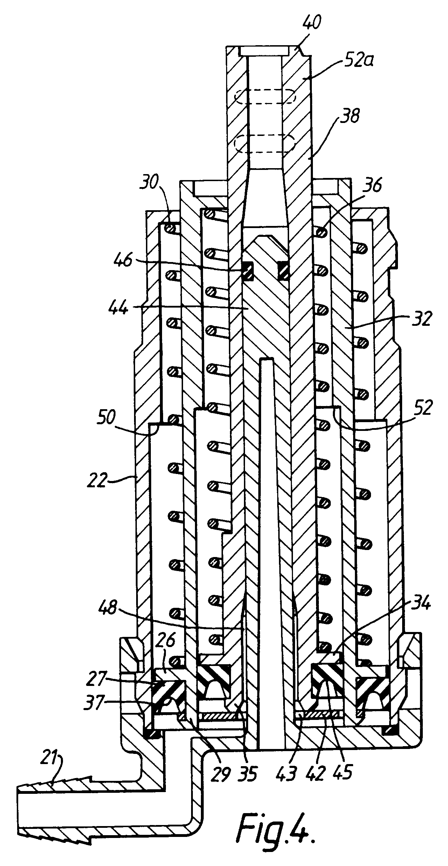

Figure 4 shows a preferred embodiment of the present invention in cross-section with like parts designated by like reference numerals as in Figure 3. Thus, there is a conduit 21 for supplying cleaning fluid from the supply reservoir to the outer cylinder 22. A first movable component defines the inner cylinder 32 and has an annulus extending around a base region thereof to define the first piston 26. The movable component (piston 26 and cylinder 32) moves within the outer cylinder 22 against the action of a spring 30. An annular seal 27 is held between the piston 26 and a curved end wall 29 of the cylinder 32 to ensure sealing between the piston 26 and the outer cylinder 22. The seal 27 defines a downwardly facing U-shaped channel 37 which fluid can enter to urge the movable component upwards. The inner cylinder 32 has a base 42 which has perforations 43 which allow fluid to enter the inner cylinder 32. A second movable component defines a tubular cylindrical elongate nozzle support portion 38 and has an annulus extending around its base region defining the second piston 34. The lower wall 35 of the nozzle support portion holds between it and the piston 34 an annular seal 45 similar to that designated by reference numeral 27 to ensure sealing between the piston 34 and the inner cylinder 32. The lower wall 35 is supported by the perforated plate 42 of the inner cylinder 32. The nozzle support portion 38 rides over a central guide 44 which carries near its tip an O-ring 46 for sealing the central guide 44 relative to the inner wall of the nozzle support portion 38.

The limit of travel of the first piston 26 is effectively defined by the compression length of the spring 30. However there is around this point an abutment 50 defined in the outer cylinder 22 against which the piston 26 abuts at the end of its travel. This prevents the spring 30 from becoming coil bound. Similarly, the length of travel of the second piston 34 is limited by the compression length of the spring 36 and there is an abutment 52 against which the piston 34 abuts.

The nozzle support portion 38 extends upwardly into a region 52a to which a spray nozzle can be secured.

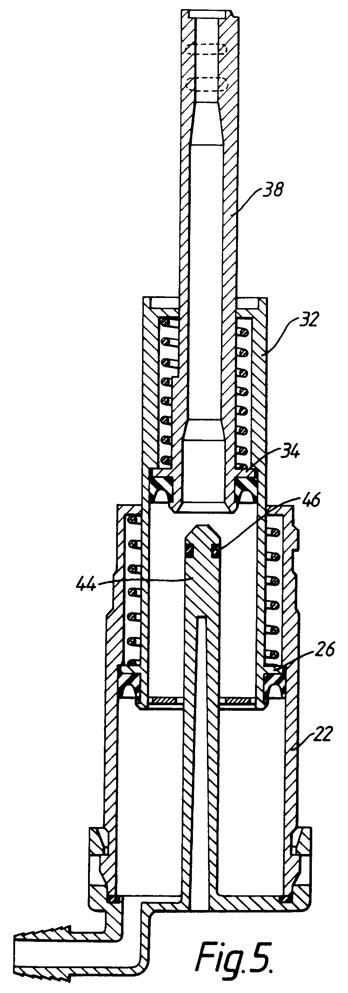

Operation of the fluid delivery device will now be described with reference to Figures 4 and 5.

Fluid entering the conduit 21 from the supply reservoir 18 acts on the seal 27 and the first piston 26 to cause it to move upwardly against the pressure of spring 30. The perforated base plate 42 causes the second piston 34 to be carried up with the first piston 26 while at the same time fluid enters the inner cylinder 32 through perforations 43 in the base plate 42. The action of this fluid causes the second piston 34 to rise against the pressure of spring 36 relative to the inner cylinder 32. Fluid is prevented from reaching a spray nozzle which will be situated at the top region 52a of the inner nozzle support portion 38 by the sealing action of the O ring 46 against the inner walls of the nozzle support portion 38. At the base of the inner portion 38, the inner wall is expanded slightly as indicated at reference numeral 48 so that fluid will start to flow past the inner guide portion 44 to the nozzle before the piston reaches the top of its travel. This arrangement reduces turbulence which would result if fluid flow were to commence abruptly when the base of the inner portion 38 is separated from the O-ring 46.

When the supply of cleaning fluid is turned off, the action of the springs 30 and 36 drive the pistons 26,34 back to their rest postion.

The sealing of the O-ring 46 against the inner wall of the support portion 38 prevents fluid from reaching the top region 52a of the nozzle support portion 38 until the fluid delivery system is almost fully extended.

As an alternative, it is possible to provide a valve system in the top region 52a of the nozzle support portion 38, that is where the spray nozzle is to be secured which remains closed until the telescopic assembly is fully extended and which then opens. Such valve systems are known for single action telescopic assemblies as described for example in FR-A-2523909. In addition, the valve assembly described in GB-A-2272363 filed on november 16^{th}, 1992 and published on may 18^{th}, 1994 can also be used in place of the sealing arrangement described above.

Although the present invention is particularly appropriate for washing motor vehicle headlamps, it will be apparent that it can also be used for tail lamps, windscreens and the like.

## Claims

1. A fluid delivery system for delivering cleaning fluid in a washer system for a vehicle, the fluid delivery system comprising:
a first piston(26)/cylinder(22) combination connected or connectable to a supply reservoir (18) containing a cleaning fluid, one of the piston (26) and cylinder (22) of the first combination being movable relative to the other under the action of cleaning fluid and against the action of first biasing means (30); and
a movable nozzle support portion (38) adapted to support a nozzle at its distal end for the delivery of cleaning fluid; characterised by
a second piston(34)/cylinder(32) combination movable with the movable one of the piston (26) and cylinder (22) of the first combination and having one of its piston and cylinder movable relative to the other under the action of cleaning fluid and against the action of second biasing means (36); and
the nozzle support portion (38) being movable with the movable one of the piston (34) and cylinder (32) of the second combination.

2. A fluid delivery assembly as claimed in claim 1 in which the cylinder (22) of the first combination is fixed relative to a vehicle body while the piston (26) of the first combination is movable and wherein a cylinder (32) of the second combination is movable with the piston (26) of the first combination while the piston (34) of the second combination moves relative to its cylinder (32) and carries the nozzle support portion (38).

3. A fluid delivery system as claimed in claim 2 which comprises a guide element (44) for guiding movement of the nozzle support portion and which is in sealing contact (46) with the nozzle support portion during movement thereof.

4. A fluid delivery system as claimed in claim 3 wherein the inner diameter of the nozzle support portion (38) is enlarged (48) at its proximate end region so that cleaning fluid can begin to flow into the nozzle support portion (38) before the fluid delivery assembly is fully extended.

5. A fluid delivery system as claimed in any preceding claim which comprises an outer housing (22) constituting the cylinder of the first piston/cylinder combination, a first component (26,32) movable with respect to the outer housing and constituting the piston (26) of the first piston/cylinder combination and the cylinder (32) of the second piston/cylinder combination, and a second component (34,38) movable with respect to the first component and constituting the piston (34) of the second piston/cylinder combination and the nozzle support portion (38).

## Patentansprüche

1. Flüssigkeitsaustrittssystem zur Beaufschlagung eines Fahrzeugteils mit Waschflüssigkeit als Teil eines fahrzeugeigenen Waschanlage, das eine erste, mit einem Waschflüssigkeits-Vorratsbehälter (18) verbundene bzw. verbindbare Kombination aus Kolben (26) und Zylinder (22), bei der entweder der Kolben (26) gegenüber dem Zylinder (22) oder der Zylinder (22) gegenüber dem Kolben (26) unter der Wirkung der Waschflüssigkeit und entgegen der Wirkung eines ersten Druckmittels (30) beweglich ist, sowie einen beweglichen Düsenträgerteil (38) umfaßt, der an seinem entfernten Ende zur Aufnahme einer Düse für den Austritt der Waschflüssigkeit ausgebildet ist, **dadurch gekennzeichnet, daß** innerhalb des beweglichen Elementes der ersten Kolben/Zylinderkombination (d.h. des Kolbens (26) oder des Zylinders (26)) eine zweite Kombination aus Kolben (34) und Zylinder (32) vorgesehen ist, bei der entweder der Kolben gegenüber dem Zylinder oder der Zylinder gegenüber dem Kolben unter der Wirkung der Waschflüssigkeit und entgegen der Wirkung eines zweiten Druckmittels (36) beweglich ist, und zudem der Düsenträgerteil (38) innerhalb des beweglichen Elementes (d.h. des Kolbens 34) oder Zylinders 32) der zweiten Kolben/Zylinderkombination beweglich ist.

2. Flüssigkeitsaustrittssystem gemäß Anspruch 1, wobei der Zylinder (22) der ersten Kombination relativ zu der Fahrzeugkarosserie starr befestigt, der Kolben (26) der ersten Kombination dagegen beweglich ist, ein Zylinder (32) der zweiten Kombination mit dem Kolben (26) der ersten Kombination beweglich ist und sich der Kolben (34) der zweiten Kombination relativ zu seinem Zylinder (32) bewegt und zudem das Düsenträgerteil (38) trägt.

3. Flüssigkeitsaustrittssystem gemäß Anspruch 2, ausgestattet mit einem Führungselement (44), das zur Führung des Düsenträgerteils dient und sich bei der Bewegung des Düsenträgerteils in dichtender Berührung (46) mit diesem befindet.

4. Flüssigkeitsaustrittssystem gemäß Anspruch 3, wobei der Innendurchmesser des Düsenträgerteils (38) im Bereich seines innenliegenden Endes vergrößert (48) ist, damit bereits Waschflüssigkeit in den Düsenträgerteil (38) einströmen kann, wenn das Flüssigkeitsaustrittssystem noch nicht völlig ausgefahren ist.

5. Flüssigkeitsaustrittssystem nach einem der vorstehenden Ansprüche, ausgestattet mit einem äußeren Gehäuse (22), das den Zylinder der ersten Kolben/Zylinderkombination bildet, einem gegenüber diesem äußeren Gehäuse beweglichen ersten Element (26,32), das den Kolben (26) der ersten Kolben/Zylinderkombination sowie den Zylinder (32) der zweiten Kolben/Zylinderkombination (34,38) darstellt, sowie einem zweiten Element (34,38), das gegenüber dem ersten Element beweglich ist und den Kolben (34) der zweiten Kolben/Zylinderkombination sowie das Düsenträgerteil (38) bildet.

## Revendications

1. Système de projection de liquide destiné à projeter un liquide de nettoyage dans un système de lavage pour un véhicule, lequel système de projection de liquide comprend:
une première combinaison de piston (26) et cylindre (22) reliée ou pouvant être reliée à un réservoir d'alimentation (18) contenant un liquide de nettoyage, l'un des éléments de la première combinaison de piston (26) et cylindre (22) pouvant être mobile par rapport à l'autre sous l'action du liquide de nettoyage contre l'action de premiers moyens à ressorts (30); et
une partie porte-gicleurs mobile (38) apte à supporter un gicleur à son extrémité distale pour la projection de liquide de nettoyage ;
caractérisé par une seconde combinaison de piston (34) et cylindre (32) mobile avec l'un des éléments mobiles de la première combinaison de piston (26) et cylindre (22) et dont l'un des éléments de piston et de cylindre est mobile par rapport à l'autre sous l'action du liquide de nettoyage contre l'action de seconds moyens de ressorts (36) ; et
la partie porte-gicleurs (38) étant mobile avec l'élément mobile de la seconde combinaison de piston (34) et cylindre (32).

2. Système de projection de liquide selon la revendication 1, caractérisé en ce que le cylindre (22) de la première combinaison est fixe par rapport à la carrosserie de véhicule alors que le piston (26) de la première combinaison est mobile, et en ce que un cylindre (32) de la seconde combinaison est mobile avec le piston (26) de la première combinaison tandis que le piston (34) de la seconde combinaison se déplace par rapport à son cylindre (32) et porte la partie porte-gicleurs (38).

3. Système de projection de liquide selon la revendication 2, caractérisé en ce qu'il comporte une élément de guidage (44) destiné à guider le mouvement de la partie porte-gicleurs et qui est en contact étanche (46) avec la partie porte-gicleurs pendant le déplacement de celle-ci.

4. Système de projection de liquide selon la revendication 3, caractérisé en ce que le diamètre intérieur de la partie porte-gicleurs (38) est élargi (48) dans sa région d'extrémité proximale de telle sorte que le liquide nettoyant puisse commencer à s'écouler dans la partie porte-gicleurs (38) avant que l'ensemble de projection de liquide soit entièrement déployé.

5. Système de projection de liquide selon l'une quelconque des revendications précédentes, caractérisé en ce qu'il comporte un logement extérieur (22) formant le cylindre de la première combinaison de piston et de cylindre, un premier composant (26,32) mobile par rapport au logement extérieur et formant le piston (26) de la première combinaison de piston et cylindre et le cylindre (32) de la seconde combinaison de piston et cylindre, et un second composant (34,38) mobile par rapport au premier composant et formant le piston (34) de la seconde combinaison de piston et cylindre et la partie porte-gicleurs (38).
